# FASCICULE DE BREVET EUROPEEN

(11) **EP 1 999 022 B1**
(45) Date de publication et mention de la délivrance du brevet: **24.02.2010**
(21) Numéro de dépôt: 07731048.0
(22) Date de dépôt: 27.02.2007
(51) Int. Cl.: B64D 33/02, F02K 1/82, F04D 29/66, F02C 7/045, B64D 29/06

(54) **STRUCTURE DE VIROLE D'ENTREE D'AIR**
ABDECKSTRUKTUR FÜR EINEN LUFTEINLASS
AIR INLET SHROUD STRUCTURE

(30) Priorité: 24.03.2006 FR 0602549
(43) Date de publication de la demande: 10.12.2008
(73) Titulaire: Aircelle, 76700 Gonfreville L'Orcher (FR)
(72) Inventeur: VAUCHEL, Guy, Bernard, F-76610 Le Havre (FR); THOREL, Christophe, F-76620 Le Havre (FR)
(74) Mandataire: Jouanneau, Lionel
(86) Numéro de dépôt international: PCT/FR2007/000344
(87) Numéro de publication internationale: WO 2007/110491

(56) Documents cités:
- EP-A2- 1 084 951
- GB-A- 1 543 312
- GB-A- 2 065 766
- US-A- 3 890 060
- US-A- 4 534 167

## Description

La présente invention se rapporte à une nacelle pour turboréacteur comprenant une structure d'entrée d'air apte à canaliser un flux d'air vers une soufflante du turboréacteur et une structure médiane comportant un carter destiné à entourer ladite soufflante et auquel est rattaché la structure d'entrée d'air, cette dernière présentant une surface intérieure périphérique au moins partiellement équipée d'une structure d'atténuation acoustique s'étendant sans rupture géométrique sur au moins une partie du carter.

Un avion est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

Une nacelle présente généralement une structure comprenant une entrée d'air en amont du moteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval sur laquelle est rapportée la lèvre et destinée à canaliser convenablement l'air vers les aubes de la soufflante. L'ensemble est rattaché en amont d'un carter de la soufflante appartenant à la section amont de la nacelle.

Le document US 3 890 060 décrit une nacelle possédant une structure d'atténuation acoustique s'étendant depuis la structure aval de l'entrée d'air jusqu'en aval de la nacelle sans rupture géométrique.

Le document US 4 534 167 décrit un système d'attache entre la structure d'entrée d'air et le carter de la structure médiane permettant de préserver la continuité de la structure d'atténuation acoustique.

Le document GB 2 065 766 décrit un espace entre une structure d'atténuation acoustique et du carter d'un turboréacteur.

Toutefois, il a été constaté que lorsque l'on souhaite installer une structure d'atténuation acoustique s'étendant depuis la structure aval de la structure d'entrée d'air jusqu'au carter, l'ensemble ainsi fixé devient hyperstatique entre la bride d'attache de la structure d'atténuation acoustique de la structure d'entrée d'air aval et la bride d'attache du carter.

La présente invention a pour but de pallier les inconvénients précédemment évoqués et consiste pour cela en une nacelle pour turboréacteur comprenant une structure d'entrée d'air apte à canaliser un flux d'air vers une soufflante du turboréacteur et une structure médiane comportant un carter destiné à entourer ladite soufflante et auquel est rattaché la structure d'entrée d'air, cette dernière présentant une surface intérieure périphérique au moins partiellement équipée d'une structure d'atténuation acoustique s'étendant sans rupture géométrique sur au moins une partie du carter, caractérisée en ce qu'un espace est ménagé entre la structure d'atténuation acoustique et le carter.

Ainsi, en prévoyant un espace entre le carter et la structure d'atténuation acoustique, cette dernière n'est plus directement liée au carter, réduisant de ce fait le degré d'hyperstaticité.

Toutefois, la partie de la structure d'atténuation acoustique s'étendant au niveau du carter peut être soumise en vol à des vibrations plus ou moins importantes selon la longueur de la structure d'atténuation acoustique dépassant au niveau du carter, ces vibrations se transmettant à l'ensemble de la nacelle et notamment au reste de la structure d'atténuation acoustique, créant de ce fait des déformations plus ou moins importantes qui entraînent à leur tour des perturbations aérodynamiques et acoustiques dues à la rupture de continuité des lignes aérodynamiques de la structure d'atténuation acoustique. Les améliorations suivantes permettent de pallier ces inconvénients additionnels.

Avantageusement, la structure d'atténuation acoustique comprend au moins un moyen de renforcement structurel.

Préférentiellement, les moyens de renforcement structurel comprennent un fourreau, rapporté ou intégré à la structure d'atténuation acoustique.

Préférentiellement encore, le fourreau possède, au niveau du carter, une épaisseur décroissante en direction de la soufflante. Cette forme inclinée du fourreau permet de fournir une structure conique au niveau du carter, cette forme se reflétant par complémentarité sur le carter lui-même, qui assure alors une direction de transit des efforts proche d'un alignement avec le reste du carter.

De manière avantageuse, la structure d'atténuation acoustique est associée, au niveau du carter, avec au moins un moyen d'amortissement des vibrations.

Préférentiellement, les moyens d'amortissement comprennent un système de butée monté sur le carter et apte à empêcheur un rapprochement de la structure d'atténuation acoustique.

Avantageusement, les moyens d'amortissement comprennent au moins un organe élastique monté à l'encontre de la structure d'atténuation acoustique. Il pourra, par exemple, s'agir d'une lame élastique prenant appui, d'une part, sur la structure d'atténuation acoustique, et d'autre part, sur le carter, ou encore d'un ressort.

Préférentiellement, les moyens d'amortissement sont aptes à venir au contact de la structure d'atténuation acoustique par l'intermédiaire d'au moins un moyen de butée souple.

De manière additionnelle, la structure d'atténuation acoustique présente une extrémité aval apte à coopérer avec au moins un moyen de maintien complémentaire solidaire du carter.

Avantageusement, le moyen de maintien complémentaire comprend au moins un pion apte à coopérer avec un logement correspondant rapporté ou ménagé dans l'extrémité aval de la structure d'atténuation acoustique.

Avantageusement encore, le carter présente au moins une talonnette apte à venir supporter la structure d'atténuation acoustique au niveau de son extrémité aval.

La mise en oeuvre de l'invention sera mieux comprise à l'aide de la description détaillée qui est exposée ci-dessous en regard du dessin annexé dans lequel :
La figure 1 est une représentation schématique de la structure générale d'une nacelle de turboréacteur selon l'invention.
Les figures 2 à 9 sont des représentations schématiques partielles de la jonction entre une structure d'entrée d'air et un carter de la nacelle de la figure 1.

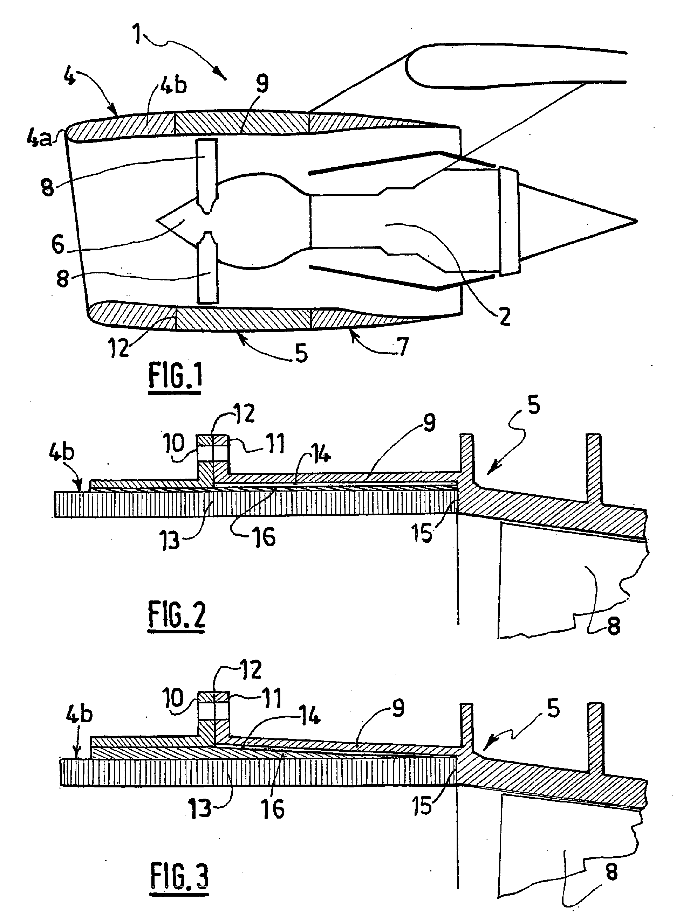

Une nacelle 1 selon l'invention telle que représentée sur la figure 1 constitue un logement tubulaire pour un turboréacteur 2 dont elle sert à canaliser les flux d'air qu'il génère en définissant des lignes aérodynamiques internes et externes nécessaires à l'obtention de performances optimales. Elle abrite également différents composants nécessaires au fonctionnement du turboréacteur 2 ainsi que des systèmes annexes tels qu'un inverseur de poussée.

Plus précisément, la nacelle 1 possède une structure comprenant une section avant formant une entrée d'air 4, une section médiane 5 entourant une soufflante 6 du turboréacteur 2, et une section arrières 7 entourant le turboréacteur 2 et abritant un système d'inversion de poussée (non visible).

L'entrée d'air 4 se divise en deux parties, à savoir d'une part, une lèvre 4a d'entrée adaptée pour permettre la captation optimale vers le turboréacteur 2 de l'air nécessaire à l'alimentation de la soufflante 6 et des compresseurs internes du turboréacteur 2, et d'autre part, une structure aval 4b sur laquelle est rapportée la lèvre 4a et destinée à canaliser convenablement l'air vers les aubes 8 de la soufflante 6. L'ensemble est rattaché en amont d'un carter 9 de la soufflante 6 appartenant à la section médiane 5 de la nacelle 1 par l'intermédiaire de brides de fixation 10, 11 solidaires respectivement de la structure aval 4b et du carter 9 et formant une jonction 12.

La structure aval 4b est équipée, du côté intérieur, d'une structure d'atténuation acoustique 13 s'étendant au-delà de la jonction 12 au moins partiellement à l'intérieur du carter 9.

Le carter 9 est conçu de manière à ménager un espace 14 entre ledit carter 9 et la structure d'atténuation acoustique 13, la continuité de la ligne aérodynamique de l'intérieur de la nacelle 1 s'effectuant au niveau d'une extrémité 15 de la structure d'atténuation acoustique qui est en contact avec le carter 9 juste avant l'aube 8.

Les figures 2 et 3 montrent un perfectionnement de cette disposition selon lequel la structure d'atténuation acoustique comprend des moyens de renforcement structural. En effet, en vol, la partie de la structure d'atténuation acoustique 13 s'étendant au niveau du carter 9 est soumise à des vibrations plus ou moins importantes qui créent à leur tour des perturbations aérodynamiques et acoustiques. Comme représenté sur la figure 2, la structure d'atténuation acoustique 13 comprend un fourreau 16, rapporté ou intégré à la structure d'atténuation acoustique 13. Avantageusement, comme représenté sur la figure 3, ce fourreau 16 présente, pour la partie de la structure d'atténuation acoustique 13 s'étendant à l'intérieur du carter 9, une épaisseur décroissante dans la direction de la soufflante 6 conférant ainsi une forme conique. Le carter 9 est adapté en conséquence pour refléter cette forme, conférant alors à la partie amont du carter une direction de transit d'effort proche de l'alignement avec le reste du carter 9.

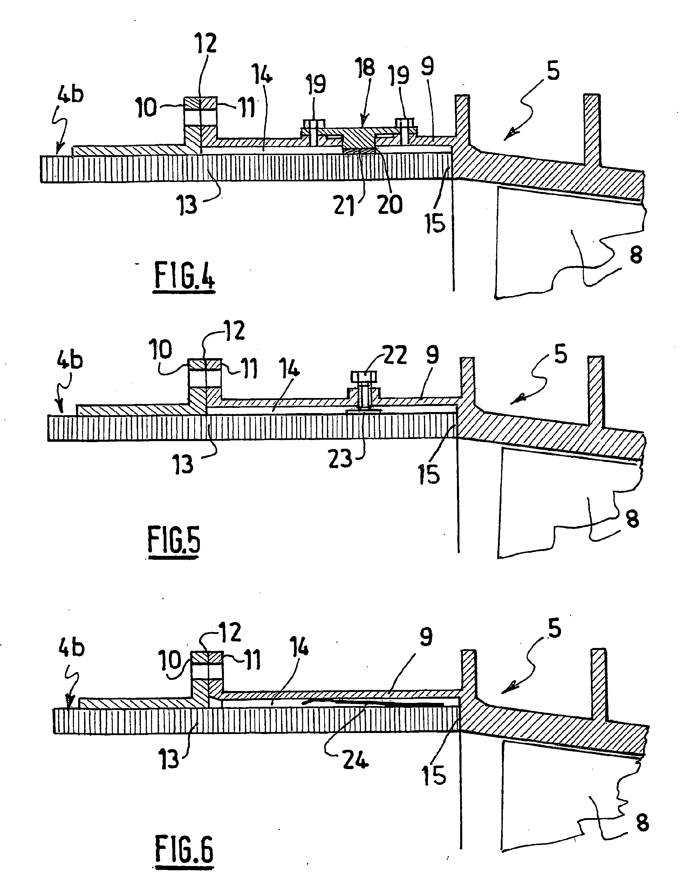

En variante ou de manière complémentaire, le carter 9 est équipée d'au moins un moyen d'atténuation des vibrations de la structure d'atténuation acoustique 13. Différents modes de réalisation sont représentés sur les figures 4 à 7.

Comme représenté sur la figure 4, le carter 9 est équipé d'un moyen de butée 18 assujetti au carter 9 par des moyens de fixation 19. Le moyen de butée 18 présente une tête 20 traversant le carter 9 et terminé par une butée souple 21 en contact avec la structure d'atténuation acoustique 13.

Comme représenté sur la figure 5, le carter 9 est équipé d'un système d'absorption des vibrations 22 en contact rigide avec la structure d'atténuation acoustique 13 par l'intermédiaire d'une butée ponctuelle 23. Le système d'absorption de vibrations 22 peut être réglé à la pression désirée. La butée ponctuelle 23 peut éventuellement être souple.

Comme représenté sur la figure 6, le carter 9 est équipé d'une lame élastique 24 située dans l'espace 14 et vient prendre appui, d'une part, sur le carter 9, et d'autre part, sur la structure d'atténuation acoustique 13 dont il absorbe les vibrations.

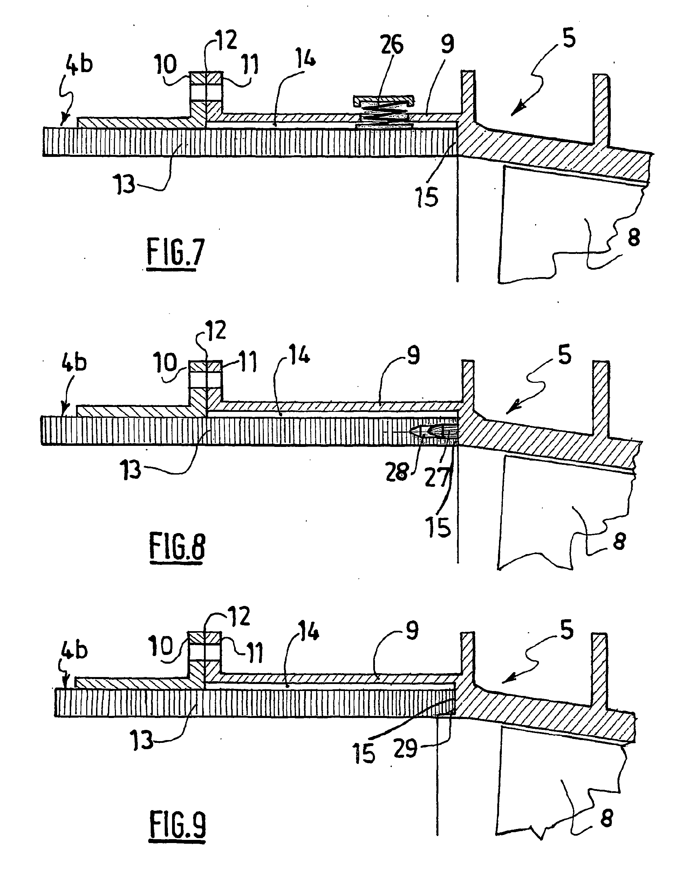

Comme représenté sur la figure 7, la lame élastique 24 est remplacée par un ressort 26.

Bien évidemment, le ressort 26 et la lame élastique 24 possèdent une raideur adaptée aux vibrations à absorber.

Alternativement ou de manière complémentaire, le carter 9 est équipé d'au moins un moyen de maintien dont deux exemples sont représentés sur les figure 8 et 9.

Comme représenté sur la figure 8, le carter 9 est équipé d'un pion 27 apte à coopérer par complémentarité de forme avec un logement 28 ménagé dans la structure d'atténuation acoustique 13. Ce logement 28 peut être rapporté sur la structure d'atténuation acoustique 13 ou intégré à celle-ci.

Comme représenté sur la figure 9, le carter 9 est équipé d'une talonette 29 complète ou partielle, avantageusement positionnée sur la périphérie intérieure du carter 9 à l'abord de la jonction avec la structure d'atténuation acoustique 13 à proximité de la soufflante 6 et apte à venir en support de la structure d'atténuation acoustique 13. Une forme, par exemple en chanfrein, d'aide au centrage peut éventuellement être pratiquée dans la structure d'atténuation acoustique 13.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (1) pour turboréacteur (2) comprenant une structure d'entrée d'air (4) apte à canaliser un flux d'air vers une soufflante (6) du turboréacteur et une structure médiane (5) comportant un carter (9) destiné à entourer ladite soufflante et auquel est rattaché la structure d'entrée d'air, cette dernière présentant une surface intérieure périphérique au moins partiellement équipée d'une structure d'atténuation acoustique (13) s'étendant sans rupture géométrique sur au moins une partie du carter, **caractérisée en ce qu'**un espace (14) est ménagé entre la structure d'atténuation acoustique et le carter.

2. Nacelle (1) selon la revendication 1, **caractérisée en ce que** la structure d'atténuation acoustique (13) comprend au moins un moyen de renforcement structurel (16).

3. Nacelle (1) selon la revendication 2, **caractérisée en ce que** les moyens de renforcement structurel comprennent un fourreau (16), rapporté ou intégré à la structure d'atténuation acoustique (13).

4. Nacelle (1) selon la revendication 3, **caractérisée en ce que** le fourreau (16) possède, au niveau du carter (9), une épaisseur décroissante en direction de la soufflante (6).

5. Nacelle (1) selon l'une quelconque des revendications 1 à 4, **caractérisée en ce que** la structure d'atténuation acoustique (13) est associée, au niveau du carter (9), avec au moins un moyen d'amortissement de vibrations (18, 22, 24, 26).

6. Nacelle (1) selon la revendication 5, **caractérisée en ce que** les moyens d'amortissement comprennent au moins un système de butée (18) monté sur le carter (9) et apte à empêcher un rapprochement de la structure d'atténuation acoustique (13).

7. Nacelle (1) selon l'une quelconque des revendications 5 ou 6, **caractérisée en ce que** les moyens d'amortissement comprennent au moins un organe élastique monté à l'encontre de la structure d'atténuation acoustique.

8. Nacelle (1) selon l'une quelconque des revendications 6 ou 7, **caractérisée en ce que** les moyens d'amortissement (18, 22) sont aptes à venir au contact de la structure d'atténuation acoustique (13) par l'intermédiaire d'au moins une butée souple (21, 23).

9. Nacelle (1) selon l'une quelconque des revendications 1 à 8, **caractérisée en ce que** la structure d'atténuation acoustique (13) présente une extrémité (15) aval apte à coopérer avec au moins un moyen de maintien (27, 29) complémentaire solidaire du carter (9).

10. Nacelle (1) selon la revendication 9, **caractérisée en ce que** le moyen de maintien complémentaire comprend au moins un pion (27) apte à coopérer avec au moins un logement (28) correspondant rapporté ou ménagé dans l'extrémité (15) aval de la structure d'atténuation acoustique (13).

11. Nacelle (1) selon l'une quelconque des revendications 9 ou 10, **caractérisée en ce que** le carter (9) présente au moins une talonnette (29) apte à venir supporter la structure d'atténuation acoustique (13) au niveau de son extrémité (15) aval.

## Claims

1. A nacelle (1) for a turbojet (2) comprising an air intake structure (4) capable of channeling a flow of air toward a fan (6) of the turbojet and a middle structure (5) comprising a casing (9) designed to surround said fan and to which the air intake structure is attached, the latter having an inner peripheral surface at least partially fitted with a sound attenuation structure (13) extending with no geometric break over at least a portion of the casing, **characterized in that** a space (14) is arranged between the sound attenuation structure and the casing.

2. The nacelle (1) as claimed in claim 1, **characterized in that** the sound attenuation structure (13) comprises at least one structural reinforcement means (16).

3. The nacelle (1) as claimed in claim 2, **characterized in that** the structural reinforcement means comprise a sheath (16), fitted or incorporated into the sound attenuation structure (13).

4. The nacelle (1) as claimed in claim 3, **characterized in that** the sheath (16) has, at the casing (9), a thickness that decreases in the direction of the fan (6).

5. The nacelle (1) as claimed in any one of claims 1 to 4, **characterized in that** the sound attenuation structure (13) is associated, at the casing (9), with at least one vibration-damping means (18, 22, 24, 26).

6. The nacelle (1) as claimed in claim 5, **characterized in that** the damping means comprise at least one abutment system (18) mounted on the casing (9) and capable of preventing the sound attenuation structure (13) moving nearer.

7. The nacelle (1) as claimed in either one of claims 5 or 6, **characterized in that** the damping means comprise at least one elastic member mounted against the sound attenuation structure.

8. The nacelle (1) as claimed in either one of claims 6 or 7, **characterized in that** the damping means (18, 22) are capable of coming into contact with the sound attenuation structure (13) by means of at least one flexible stop (21, 23).

9. The nacelle (1) as claimed in any one of claims 1 to 8, **characterized in that** the sound attenuation structure (13) has a downstream end (15) capable of interacting with at least one complementary retention means (27, 29) fixedly attached to the casing (9).

10. The nacelle (1) as claimed in claim 9, **characterized in that** the complementary retention means comprises at least one post (27) capable of interacting with at least one corresponding housing (28) fitted or arranged in the downstream end (15) of the sound attenuation structure (13).

11. The nacelle (1) as claimed in either one of claims 9 or 10, **characterized in that** the casing (9) has at least one binding strip (29) capable of supporting the sound attenuation structure (13) at its downstream end (15).

## Patentansprüche

1. Gondel (1) für ein Turbostrahltriebwerk (2), die eine Lufteinlassstruktur (4), welche einen Luftstrom zu einem Gebläse (6) des Turbostrahltriebwerks kanalisieren kann, und eine mittlere Struktur (5) enthält, die ein Gehäuse (9) aufweist, das dazu bestimmt ist, das Gebläse zu umgeben und an dem die Lufteinlassstruktur befestigt ist, wobei letztere eine Innenumfangsfläche hat, die zumindest teilweise mit einer Schalldämpfungsstruktur (13) ausgestattet ist, die sich ohne geometrische Unterbrechung über mindestens einen Teil des Gehäuses erstreckt, **dadurch gekennzeichnet, dass** ein Zwischenraum (14) zwischen der Schalldämpfungsstruktur und dem Gehäuse ausgespart ist.

2. Gondel (1) nach Anspruch 1, **dadurch gekennzeichnet, dass** die Schalldämpfungsstruktur (13) mindestens eine Strukturverstärkungseinrichtung (16) enthält.

3. Gondel (1) nach Anspruch 2, **dadurch gekennzeichnet, dass** die Strukturverstärkungseinrichtungen eine Hülse (16) enthalten, die auf die Schalldämpfungsstruktur (13) aufgesteckt oder in sie integriert ist.

4. Gondel (1) nach Anspruch 3, **dadurch gekennzeichnet, dass** die Hülse (16) in Höhe des Gehäuses (9) eine in Richtung des Gebläses (6) abnehmende Dicke besitzt.

5. Gondel (1) nach einem der Ansprüche 1 bis 4, **dadurch gekennzeichnet, dass** die Schalldämpfungsstruktur (13) in Höhe des Gehäuses (9) mindestens einer Schwingungsdämpfungseinrichtung (18, 22, 24, 26) zugeordnet ist.

6. Gondel (1) nach Anspruch 5, **dadurch gekennzeichnet, dass** die Dämpfungseinrichtungen mindestens ein Anschlagsystem (18) enthalten, das auf das Gehäuse (9) montiert und fähig ist, eine Annäherung der Schalldämpfungsstruktur (13) zu verhindern.

7. Gondel (1) nach einem der Ansprüche 5 oder 6, **dadurch gekennzeichnet, dass** die Dämpfungseinrichtungen mindestens ein elastisches Organ enthalten, das gegen die Schalldämpfungsstruktur montiert ist.

8. Gondel (1) nach einem der Ansprüche 6 oder 7, **dadurch gekennzeichnet, dass** die Dämpfungseinrichtungen (18, 22) über mindestens einen biegsamen Anschlag (21, 23) mit der Schalldämpfungsstruktur (13) in Kontakt kommen können.

9. Gondel (1) nach einem der Ansprüche 1 bis 8, **dadurch gekennzeichnet, dass** die Schalldämpfungsstruktur (13) ein hinteres Ende (15) aufweist, das mit mindestens einer komplementären Halteeinrichtung (27, 29) zusammenwirken kann, die fest mit dem Gehäuse (9) verbunden ist.

10. Gondel (1) nach Anspruch 9, **dadurch gekennzeichnet, dass** die komplementäre Halteeinrichtung mindestens einen Zapfen (27) enthält, der mit mindestens einer entsprechenden Aufnahme (28) zusammenwirken kann, die auf das hintere Ende (15) der Schalldämpfungsstruktur (13) aufgesteckt oder in diesem ausgespart ist.

11. Gondel (1) nach einem der Ansprüche 9 oder 10, **dadurch gekennzeichnet, dass** das Gehäuse (9) mindestens einen Absatz (29) aufweist, der die Dämpfungsstruktur (13) in Höhe ihres hinteren Endes (15) stützen kann.
